# EUROPEAN PATENT APPLICATION

(11) **EP 4 180 309 A1**
(43) Date of publication of application: **17.05.2023**
(21) Application number: 22195005.8
(22) Date of filing: 12.09.2022
(51) Int. Cl.: B62K 21/02, B62L 3/02, B62M 7/02

(54) **A SADDLE TYPE VEHICLE**

(30) Priority: 12.11.2021 IN 202141051981
(71) Applicant: TVS Motor Company Limited, 600006 Chennai (IN)
(72) Inventor: Ravilla, Prasad, 600 006 Chennai (IN); Kakkanattu Mathews, Winney, 600 006 Chennai (IN); Manga Raju, Karanam Venkata, 600 006 Chennai (IN)
(74) Representative: Patentanwaltskanzlei Matschnig & Forsthuber OG

(57) **Abstract**

A saddle type vehicle (10) having a pair of front forks (26), a lower bracket (40), a master cylinder (110) provided on a handlebar (50), a first hydraulic brake (120), a second hydraulic brake (130), an ABS modulator, a distributor (140) for distributing hydraulic force between the first hydraulic brake (120) and the second hydraulic brake (130), a first rigid tube (210) acting as a brake input to the ABS modulator; a first flexible pipe (220) connected between the first rigid tube (210) and the master cylinder (110), a second rigid tube (230) acting as a braking output from the ABS modulator, a second flexible pipe (240) connected to the second rigid tube (230), a third rigid tube (250) connected to the second flexible pipe (240) and disposed below the lower bracket (40), and a third flexible pipe (260) connected between the third rigid tube (250) and the distributor (140).

## Description

### FIELD OF THE INVENTION

The present invention generally relates to a saddle type vehicle. More particularly, the present invention relates to routing of brake hoses in a saddle type vehicle.

### BACKGROUND OF THE INVENTION

Generally, in saddle type vehicles with higher engine capacity, hydraulic braking is prevalent. Vehicles in which an Anti Lock Braking System (ABS) is not present, the hose routing and design is simple as the front brake hose is directly connected between front master cylinder mounted on the handlebar and the front calliper is mounted on front fork. Similarly, the rear brake hose is directly connected between rear master cylinder mounted on rider footrest and rear calliper mounted on swing arm.

However, in vehicles with an ABS, the hose routing and design is complicated as four brake hoses are being used to connect the master cylinders, Hydraulic and Electronic Control unit (ABS unit) and callipers. Particularly the front brake hose routing and design is complicated as the front master cylinder hose needs be routed near the steering pivot and connected to HECU, and the front calliper hose needs to be routed near the steering pivot and connected to Calliper. The hoses and other cables getting routed near the steering pivot must not interfere with nearby parts such as head lamp, style parts, front fork and steering pivot etc.

Further, in conventional hose routing in saddle type vehicles with ABS, the front master cylinder hose consists of a rigid pipe connected to ABS unit at one end and connected to master cylinder through flexible hose at other end. Similarly, the front calliper hose is also a rigid pipe and flexible hose combination and connected between ABS unit and front calliper. The rigid pipe in the front calliper hose is routed till steering pivot and then the flexible portion is connected between the lower bracket or frame and the front calliper. During the front fork vertical movements, the flexible hose of front calliper hose shall flex or deform easily to assist in front fork movements and shall not interfere or rubbing against the nearby parts. Thus, in most of the ABS vehicles, the flexible portion is with rubber hose, which can flex easily and has many disadvantages such high expansion rate during braking and high water absorption rate and these can cause the poor brake feel.

Especially, in conventional routing, the longer stroke of the front fork damages the brake hose and causes the brake hose to break easily in fewer cycles at the portion between lower bracket and the front calliper. Further, in saddle type vehicle with dual disc brakes on the front wheel, the front calliper hose is also routed below the front master cylinder hose and routed in a circular path below the lower bracket in vehicle top view and then connected to front calliper. With this routing of brake hoses, the clearance between the front fender and the lower bracket needs to be very high in full stroke condition of the front fork, to accommodate the given two hoses. To allow for this, the steering pivot position needs to be lifted up and accordingly the height of the centre of gravity of the vehicle is increased, which is detrimental to the handling of the vehicle.

Thus, there is a need in the art for a saddle type vehicle which addresses at least the aforementioned problems.

### SUMMARY OF THE INVENTION

In one aspect, the present invention is directed towards a saddle type vehicle having a head pipe, a pair of front forks connected to the head pipe and extending substantially in an up-down direction, and a lower bracket for connecting a lower end of the head pipe to the pair of front forks. A master cylinder is provided on a handlebar and is connected to a brake lever for receiving a braking input from a rider. A first hydraulic brake is mounted on right side of a front wheel and has a first brake calliper, and a second hydraulic brake is mounted on left side of the front wheel and has a second brake calliper. An ABS modulator is provided for controlling the braking force in the first hydraulic brake and the second hydraulic brake. A distributor is provided for distributing the hydraulic force between the first hydraulic brake and the second hydraulic brake and the distributor is mounted on one of the front forks. The vehicle further has a first rigid tube connected to the ABS modulator and extending between the ABS modulator and the head tube, the first rigid tube acting as a brake input to the ABS modulator; a first flexible pipe connected between the first rigid tube and the master cylinder, the first flexible pipe routed from the first rigid tube towards the lower bracket, and then to the master cylinder at the handlebar; a second rigid tube connected to the ABS modulator, and extending between the ABS modulator and the head tube, the second rigid tube acting as a braking output from the ABS modulator; a second flexible pipe connected to the second rigid tube; a third rigid tube connected to the second flexible pipe, the third rigid tube being disposed below the lower bracket such that the second flexible pipe is connected between the second rigid tube and the third rigid tube; and a third flexible pipe connected between the third rigid tube and the distributor.

In an embodiment of the invention, the pair of front forks have a left front fork and a right front fork. In an embodiment, the distributor is mounted on a right front fork.

In a further embodiment of the invention, the vehicle has a headlamp mounting bracket extending forwardly from the head pipe. In an embodiment, the first flexible pipe is routed from under the headlamp mounting bracket.

In another embodiment of the invention, the vehicle has an end fitting attached on the second hydraulic brake, such that the end fitting is mounted on the opposite side of the distributor in the vehicle width direction.

In a further embodiment of the invention, the end fitting has an inlet end configured to receive a fourth flexible pipe for hydraulically connecting the distributor and the inlet end of the end fitting, and the end fitting is further hydraulically connected to the second brake calliper.

In a further embodiment of the invention, the end fitting has an outlet end configured to receive a fifth flexible pipe for hydraulically connecting the outlet end of the end fitting to the first brake calliper.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a right side view of an exemplary saddle type vehicle, in accordance with an embodiment of the present invention.
Figure 2 illustrates a left side view of the saddle type vehicle, in accordance with an embodiment of the present invention.
Figure 3 illustrates a right side view of the saddle type vehicle, in accordance with an embodiment of the present invention.
Figure 4 illustrates a front perspective view of the saddle type vehicle, in accordance with an embodiment of the present invention.
Figure 5 illustrates a right-rear perspective view of the saddle type vehicle, in accordance with an embodiment of the present invention.
Figure 6 illustrates a left-rear perspective view of the saddle type vehicle, in accordance with an embodiment of the present invention.
Figure 7 illustrates a perspective view of an end fitting of the saddle type vehicle, in accordance with an embodiment of the present invention.
Figure 8 illustrates a front view of the end fitting of the saddle type vehicle, in accordance with an embodiment of the present invention.

### DETAILED DESCRIPTION OF THE INVENTION

The present invention generally relates to a saddle type vehicle. More particularly, the present invention relates to routing of brake hoses in a saddle type vehicle with hydraulic brakes.

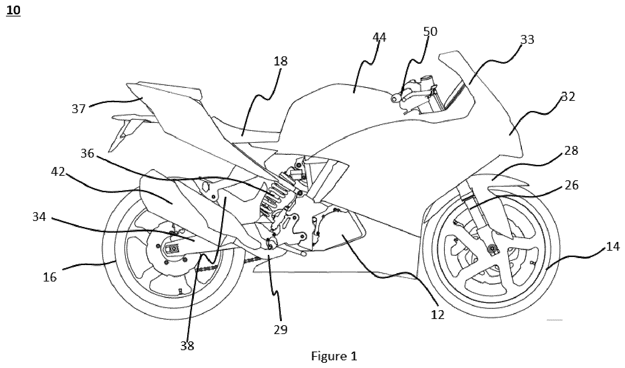

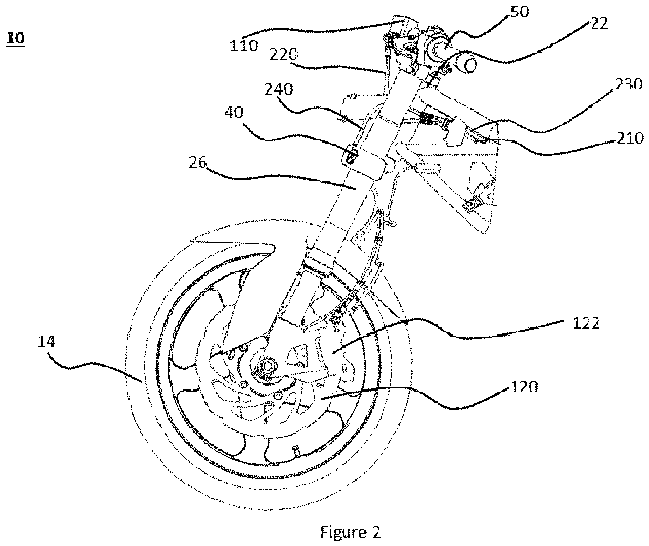

Figure 1 illustrates an exemplary saddle type vehicle 10, in accordance with an embodiment of the invention. The vehicle 10 includes an internal combustion engine 12 that is vertically disposed or a traction motor (not shown). Preferably, the Internal combustion engine 12 is a single-cylinder type internal combustion engine. The vehicle 10 further includes a front wheel 14, a rear wheel 16, a frame member, a seat assembly 18 and a fuel tank 44. The frame member includes a head pipe 22 (shown in Figure 2), a main tube 24 (not shown), a down tube (not shown), and seat rails (not shown). The head pipe 22 supports a steering shaft (not shown) and two telescopic front forks 26 attached to the steering shaft through a lower bracket 40 (shown in Figure 2). The two telescopic front forks 26 support the front wheel 14. The upper portion of the front wheel 14 is covered by a front fender 28 mounted to the lower portion of the telescopic front forks 26 at the end of the steering shaft. A head light 32, a visor guard 33 and instrument cluster (not shown) are arranged on an upper portion of the head pipe 22. The frame member having the down tube (not shown) may be located in front of the internal combustion engine 12 and extends slantly downward from the head pipe 22. The main tube of the frame member is located above the internal combustion engine 12 and extends rearward from the head pipe 22. The internal combustion engine 12 is mounted at the front to the down tube and a rear of the internal combustion engine 12 is mounted at the rear portion of the main tube. In an embodiment, the internal combustion engine 12 is mounted vertically, with a cylinder block extending vertically above a crankcase. In an alternative embodiment, the internal combustion engine 12 is mounted horizontally (not shown) with the cylinder block extending horizontally forwardly from the crankcase. In an embodiment, the cylinder block is disposed rearwardly of the down tube.

The fuel tank 44 of the vehicle 10 is mounted on the main tube. Seat rails are joined to the main tube and extend rearward to support the seat assembly 18. A rear swing arm 34 is connected to the frame member to swing vertically, and the rear wheel 16 is connected to rear end of the rear swing arm 34. Generally, the rear swing arm 34 is supported by a mono rear suspension 36 or through two suspensions (not shown) on either side of the vehicle 10. A taillight unit 37 is disposed at the end of the vehicle 10 and at the rear of the seat assembly 18. The rear wheel 16 arranged below seat 18 rotates by the driving force of the Internal combustion engine 12 transmitted through a chain drive (not shown) from the internal combustion engine 12. A rear fender 38 is disposed above the rear wheel 16.

Further, an exhaust pipe 29 of the saddle type vehicle 10 extends vertically downward from the Internal combustion engine 12 up to a point and then extends below the Internal combustion engine 12, longitudinally along the vehicle length before terminating in a muffler 42. The muffler 42 is typically disposed adjoining the rear wheel 16.

The vehicle 10 further includes a handlebar 50 connected to the head tube 22 of the frame member and extending in a vehicle width direction. The handlebar 50 can rotate to both sides of the vehicle 10 during vehicle turning movements.

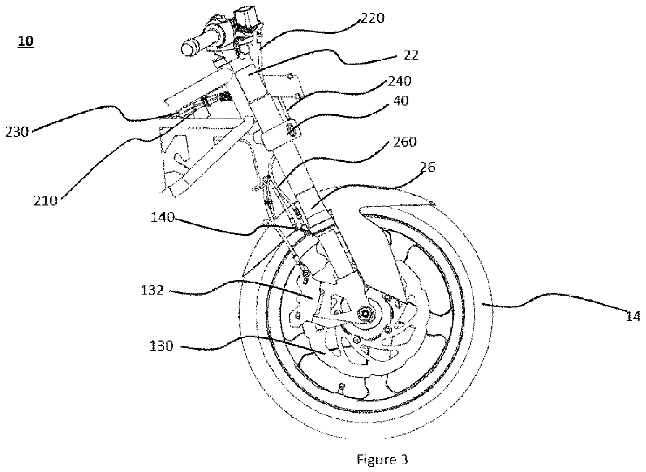

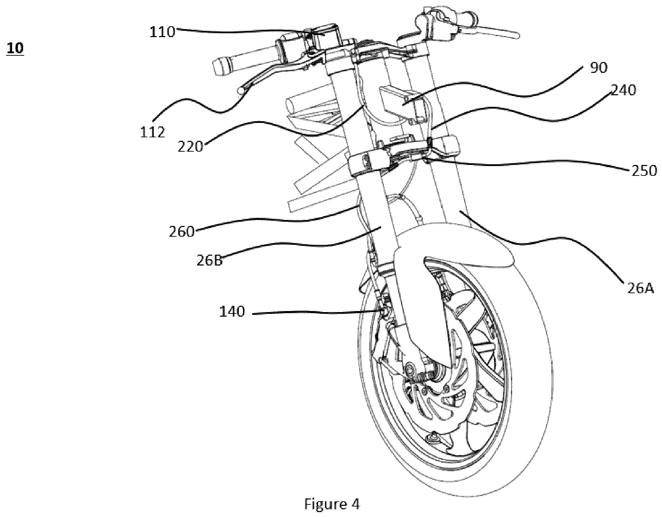

Figure 2 illustrates a left side view of the saddle type vehicle and the Figure 3 illustrates a right side view of the saddle type vehicle. As illustrated in Figures 2 and 3, the saddle type vehicle 10 comprises the pair of front forks 26 connected to the head pipe 22 and the pair of front forks 26 extend substantially in an up-down direction. As illustrated, the lower bracket 40 connects a lower end of the head pipe 22 to the pair of front forks 26. Further, a master cylinder 110 is provided on a handlebar 50 and the master cylinder 110 is connected to a brake lever 112 (shown in Figure 4) for receiving a braking input from a rider. The master cylinder 110 is configured to convert the mechanical input of the brake lever 112 received from the rider into hydraulic pressure, which then forces a brake fluid through the respective hoses.

As further illustrated in Figures 2 and 3, the saddle type vehicle 10 further has a first hydraulic brake 120 that is mounted on left side of a front wheel 14, wherein the first hydraulic brake 120 has a first brake calliper 122, a second hydraulic brake 130 mounted on right side of the front wheel 14, wherein the second hydraulic brake 130 has a second brake calliper 132. The first brake calliper 122 and the second brake calliper 132 have actuators or pistons which on provision of hydraulic pressure, press against brake discs provided on the front wheel 14, thereby applying braking force to the front wheel 14. The vehicle 10 further has an ABS modulator (not shown) for controlling the braking force in the first hydraulic brake 120 and the second hydraulic brake 130. In an embodiment, the ABS modulator comprises of a Hydraulic and Electronic Control Unit that regulates or modulates the pressure of the brake fluid based on a number of variables, and preventing the front wheel 14 from locking.

As further illustrated in Figures 2 and 3, the vehicle 10 has a distributor 140 for distributing the hydraulic force between the first hydraulic brake 120 and the second hydraulic brake 130. Herein, the distributor 140 is mounted on one of the front forks 26. In an embodiment as referenced in Figure 4, the pair of front forks 26 comprise a left front fork 26A and a right front fork 26B and the distributor 140 is mounted on the right front fork 26B.

Reference is made to Figures 2 and 3, which illustrate that the vehicle 10 has a first rigid tube 210 connected to the ABS modulator, and the first rigid tube 210 extends between the ABS modulator and the head tube 22. The first rigid tube 210 acts as a brake input to the ABS modulator. The vehicle 10 further has a first flexible pipe 220 connected between the first rigid tube 210 and the master cylinder 110. The first flexible pipe 220 is routed from the first rigid tube 210 towards the lower bracket 40, and then to the master cylinder 110 at the handlebar 50. The vehicle 10 further has a second rigid tube 230 connected to the ABS modulator. The second rigid tube 230 extends between the ABS modulator and the head tube 22 and acts as a braking output from the ABS modulator. The vehicle 10 further has a second flexible pipe 240 connected to the second rigid tube 230.

A third rigid tube 250 (shown in Figure 4) is connected to the second flexible pipe 240. The third rigid tube 250 is disposed below the lower bracket 40 such that the second flexible pipe 240 is connected between the second rigid tube 230 and the third rigid tube 250. The vehicle 10 has a third flexible pipe 260 connected between the third rigid tube 250 and the distributor 140.

Figure 4 illustrates a front perspective view of the saddle type vehicle in accordance with an embodiment of the invention, the vehicle 10 has a headlamp mounting bracket 90 extending forwardly from the head pipe 22, and is configured to support the headlamp assembly 32. In this embodiment, the first flexible pipe 220 is routed from under the headlamp mounting bracket 90.

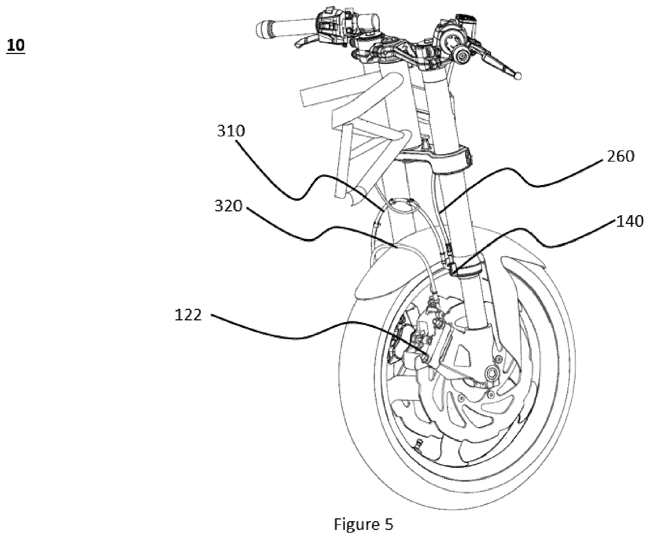

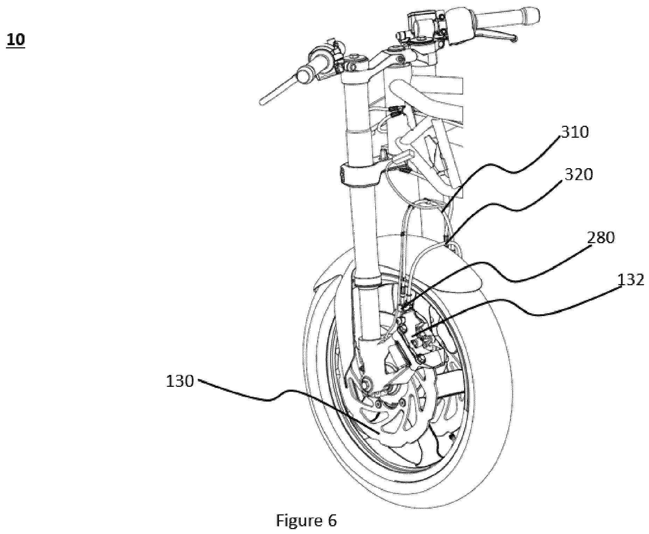

Figure 5 and Figure 6 illustrates a right and left perspective view of the saddle type vehicle in accordance with an embodiment of the invention. As illustrated in Figures 5 and 6, to facilitate the distribution of braking force between the first hydraulic brake 120 and the second hydraulic brake 130, the vehicle 10 has an end fitting 280 attached on the second hydraulic brake 130. In that, the end fitting 280 is mounted on the opposite side of the distributor 140 in the vehicle width direction. In an exemplary embodiment, wherein the distributor 140 is mounted on the right front fork 26B, the end fitting 280 is mounted on the left side of the vehicle 10.

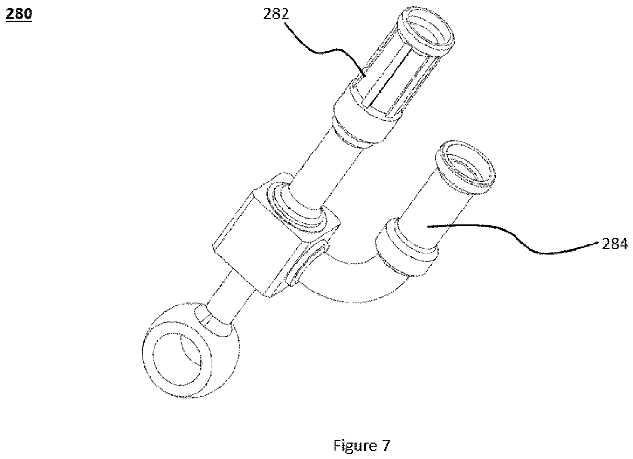

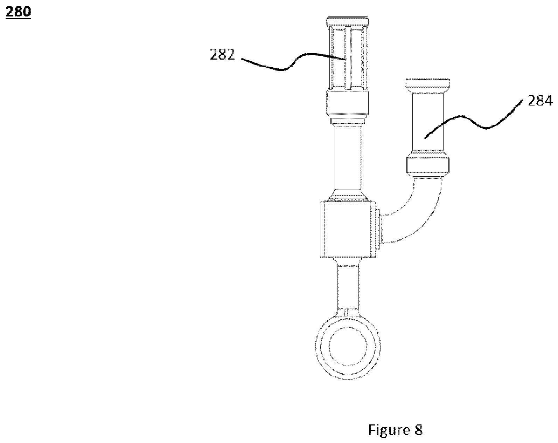

The end fitting 280 comprises an inlet end 282 (shown in Figure 7 and Figure 8) that is configured to receive a fourth flexible pipe 310 for hydraulically connecting the distributor 140 and the inlet end 282 of the end fitting 280, and the end fitting 280 is further hydraulically connected to the second brake calliper 132, thereby transmitting brake fluid to the second brake calliper 132 for braking. Further, the end fitting 280 comprises an outlet end 284 (shown in Figure 7 and Figure 8) that is configured to receive a fifth flexible pipe 320 for hydraulically connecting the outlet end 284 of the end fitting 280 to the first brake calliper 122, thereby transmitting brake fluid to the first brake calliper 122 for braking.

In operation, when the rider applies a braking force on the brake lever 112, the master cylinder 110 converts the same into hydraulic pressure. The hydraulic pressure causes the brake fluid to be force through the first flexible pipe 220, and thereafter to the first rigid tube 210 and then to the ABS modulator. The ABS modulator then modulates the hydraulic pressure as required, and the brake fluid then flows through the second rigid tube 230, then the second flexible pipe 240, then the third rigid tube 250, then the third flexible pipe 260 and onwards to the distributor 140. The brake fluid then flows from the distributor 140 the inlet end 282 of end fitting 280 through the fourth flexible pipe 310, after which a part of the brake fluid flows to the second brake calliper 132. The other part of the brake fluid flows from the outlet end 284 of the end fitting 280 to the first brake calliper 122 through a fifth flexible pipe 320, thereby providing braking force to both the first brake calliper 122 and the second brake calliper 132.

In an embodiment, the flexible pipes are made of braided steel, thereby allowing for a higher rigidity and a lower expansion rate.

Advantageously, such a routing of the flexible pipes and rigid tubes for brake hoses ensures that the area available for brake hose routing is effectively utilised, and the strain on the hoses is reduced during steering condition. Such routing also ensures that the strain on flexible pipes is also reduced during conditions of vertical movement of the front fork, even with steel braided flexible pipes.

Further, especially since the first flexible pipe is routed from the master cylinder at the handlebar, under the headlight mounting bracket towards the lower bracket allows for movement of the first flexible pipe with the steering action of the handlebar with a higher bending radius, and hence lower strain on the first flexible pipe. This also ensures that the pushing/pulling effect of the first flexible pipe on the handlebar is maintained at negligible levels.

Furthermore, provision of an end fitting along with the distributor to distribute the force between the first hydraulic brake and the second hydraulic brake also ensures that a special banjo bolt, or dedicated mountings on the front fender are not required, thereby reducing part count and complexity.

While the present invention has been described with respect to certain embodiments, it will be apparent to those skilled in the art that various changes and modification may be made without departing from the scope of the invention as defined in the following claims.

## Claims

1. A saddle type vehicle (10), comprising:
a head pipe (22);
a pair of front forks (26) connected to the head pipe (22), the pair of front forks (26) extending substantially in an up-down direction;
a lower bracket (40) for connecting a lower end of the head pipe (22) to the pair of front forks (26);
a master cylinder (110) provided on a handlebar (50), the master cylinder (110) connected to a brake lever (112) for receiving a braking input from a rider;
a first hydraulic brake (120) mounted on left side of a front wheel (14), the first hydraulic brake (120) having a first brake calliper (122);
a second hydraulic brake (130) mounted on right side of the front wheel (14), the second hydraulic brake (130) having a second brake calliper (132);
an ABS modulator for controlling the braking force in the first hydraulic brake (120) and the second hydraulic brake (130);
a distributor (140) for distributing the hydraulic force between the first hydraulic brake (120) and the second hydraulic brake (130), the distributor (140) being mounted on one of the front forks (26);
a first rigid tube (210) connected to the ABS modulator, and extending between the ABS modulator and the head tube (22), the first rigid tube (210) acting as a brake input to the ABS modulator;
a first flexible pipe (220) connected between the first rigid tube (210) and the master cylinder (110), the first flexible pipe (220) routed from the first rigid tube (210) towards the lower bracket (40), and then to the master cylinder (110) at the handlebar (50);
a second rigid tube (230) connected to the ABS modulator, and extending between the ABS modulator and the head tube (22), the second rigid tube (230) acting as a braking output from the ABS modulator;
a second flexible pipe (240) connected to the second rigid tube (230);
a third rigid tube (250) connected to the second flexible pipe (240), the third rigid tube (250) being disposed below the lower bracket (40) such that the second flexible pipe (240) is connected between the second rigid tube (230) and the third rigid tube (250); and
a third flexible pipe (260) connected between the third rigid tube (250) and the distributor (140).

2. The saddle type vehicle (10) as claimed in claim 1, wherein the pair of front forks (26) comprise a left front fork (26A) and a right front fork (26B).

3. The saddle type vehicle (10) as claimed in claim 2, wherein the distributor (140) is mounted on a right front fork (26B).

4. The saddle type vehicle (10) as claimed in claim 1, comprising a headlamp mounting bracket (90) extending forwardly from the head pipe (22).

5. The saddle type vehicle (10) as claimed in claim 4, wherein the first flexible pipe (220) is routed from under the headlamp mounting bracket (90).

6. The saddle type vehicle (10) as claimed in claim 1, comprising an end fitting (280) attached on the second hydraulic brake (130), such that the end fitting (280) is mounted on the opposite side of the distributor (140) in the vehicle width direction.

7. The saddle type vehicle (10) as claimed in claim 6, wherein the end fitting (280) comprises an inlet end (282) configured to receive a fourth flexible pipe (310) for hydraulically connecting the distributor (140) and the inlet end (282) of the end fitting (280), the end fitting (280) further being hydraulically connected to the second brake calliper (132).

8. The saddle type vehicle (10) as claimed in claim 7, wherein the end fitting (280) comprises an outlet end (284) configured to receive a fifth flexible pipe (320) for hydraulically connecting the outlet end (284) of the end fitting (280) to the first brake calliper (122).
